# EUROPÄISCHE PATENTSCHRIFT

(11) **EP 0 547 455 B1**
(45) Veröffentlichungstag und Bekanntmachung des Hinweises auf die Patenterteilung: **18.09.1996**
(21) Anmeldenummer: 92120790.8
(22) Anmeldetag: 05.12.1992
(51) Int. Cl.: G01F 1/84

(54) **Massendurchflussmessgerät**
Mass flow rate meter
Débitmètre de masse

(30) Priorität: 19.12.1991 DE 4142040; 03.01.1992 DE 4200060
(43) Veröffentlichungstag der Anmeldung: 23.06.1993
(73) Patentinhaber: Krohne AG, CH-4019 Basel (CH)
(72) Erfinder: Hussain, Yousif A., Dr. Diplom-Ingenieur, Couldson, Surrey, CR 5 2 SE (GB); Rolph, Chris N., Diplom-Ingenieur, Redhill, Surrey, RH 1 4 DE (GB)
(74) Vertreter: Gesthuysen, Hans Dieter, Dipl.-Ing.

(56) Entgegenhaltungen:
- EP-A- 0 361 388
- WO-A-87/06691
- DE-A- 4 016 907
- US-A- 4 730 501

## Beschreibung

Die Erfindung betrifft ein Massendurchflußmeßgerät für strömende Medien, das nach dem Coriolis-Prinzip arbeitet, mit mindestens einer das strömende Medium führenden, zumindest im wesentlichen geraden Coriolis-Leitung, mit mindestens einem auf die Coriolis-Leitung einwirkenden Schwingungserzeuger, mit mindestens einem Coriolis-Kräfte und/oder auf Coriolis-Kräften beruhende Coriolis-Schwingungen erfassenden Meßwertaufnehmer, mit einem die Coriolis-Leitung umschließenden Gehäuse oder Kompensationszylinder und mit einer die Steifigkeit der Coriolis-Leitung für den Anregungsmode erhöhenden, die Coriolis-Leitung in ihrem Zentrum beaufschlagenden Versteifungsfeder.

Massendurchflußmeßgeräte für strömende Medien, die nach dem Coriolis-Prinzip arbeiten, sind in verschiedenen Ausführungsformen bekannt (vgl. z. B. die DE-OSen 26 29 833, 28 22 087, 28 33 037, 29 38 498, 30 07 361, 33 29 544, 34 43 234, 35 03 841, 35 05 166, 35 26 297, 37 07 777, 39 16 285, 39 28 839, 40 16 907, 41 24 295 und 41 24 296, die EP-OSen O 083 144, 0 109 218, 0 119 638, 0 196 150, 0 210 308, 0 212 782, 0 235 274, 0 239 679, 0 243 468, 0 244 692, 0 271 605, 0 275 367 und 0 282 552 sowie die US-PSen 4,491,009, 4,628,744 und 4,666,421) und finden in zunehmendem Maße in der Praxis Verwendung.

Bei Massendurchflußmeßgeräten für strömende Medien, die nach dem Coriolis-Prinzip arbeiten, unterscheidet man grundsätzlich zwischen einerseits solchen, deren Coriolis-Leitung als gerades Rohr ausgeführt sind, und andererseits solchen, deren Coriolis-Leitung als - einfach oder mehrfach - gebogenes Rohr, auch als Rohrschleife, ausgeführt sind. Außerdem unterscheidet man bei den in Rede stehenden Massendurchflußmeßgeräten zwischen einerseits solchen, die nur eine Coriolis-Leitung aufweisen, und andererseits solchen, die zwei Coriolis-Leitungen aufweisen; bei den Ausführungen mit zwei Coriolis-Leitungen können diese strömungstechnisch in Reihe oder parallel zueinander liegen.

Ausführungsformen von Massendurchflußmeßgeräten, bei denen die Coriolis-Leitung als gerades Rohr ausgeführt ist bzw. die Coriolis-Leitungen als gerade Rohre ausgeführt sind, sind in bezug auf den mechanischen Aufbau einfach und folglich mit relativ geringen Kosten herzustellen; dabei sind auch die Rohrinnenflächen gut bearbeitbar, z. B. polierbar. Im übrigen haben sie einen geringeren Druckverlust. Nachteilig ist dabei, daß sie bei einer bestimmten Baulänge eine relativ hohe Eigenfrequenz haben. Ausführungsformen von Massendurchflußmeßgeräten, bei denen die Coriolis-Leitung als gebogenes Rohr ausgeführt ist bzw. die Coriolis-Leitungen als gebogene Rohre ausgeführt sind, haben unter den Gesichtspunkten, unter denen Ausführungsformen mit einem geraden Rohr bzw. mit geraden Rohren Vorteile haben, Nachteile; vorteilhaft ist dabei jedoch, daß sie bei einer bestimmten Baulänge eine relativ niedrige Eigenfrequenz haben.

Bei einem Massendurchflußmeßgerät, das nach dem Coriolis-Prinzip arbeitet und mindestens eine zumindest im wesentlichen gerade Coriolis-Leitung aufweist, ist bereits bei einer bestimmten Baulänge eine relativ geringe Eigenfrequenz bzw. bei einer bestimmten Eigenfrequenz eine relativ geringe Baulänge realisiert, und zwar dadurch, daß der Schwingungserzeuger über einen Pendelarm an der Coriolis-Leitung angreift (vgl. die DE-OS 41 24 296, die aus einer Patentanmeldung entstanden ist, die unter Beanspruchung der inneren Priorität der Patentanmeldung P 40 23 989.6 vom 28. Juli 1990 durchgeführt worden ist). Während bei den im übrigen bekannten Massendurchflußmeßgeräten mit mindestens einer zumindest im wesentlichen geraden Coriolis-Leitung der Schwingungserzeuger direkt an der Coriolis-Leitung angreift und damit die Coriolis-Leitung - zumindest fast ausschließlich - zu Biegeschwingungen anregt, wird bei dem zuletzt beschriebenen Massendurchflußmeßgerät, bei dem der Schwingungserzeuger über einen Pendelarm an der Coriolis-Leitung angreift, die Coriolis-Leitung zu Torsionsschwingungen und zu Biegeschwingungen angeregt. Wesentlich ist dabei, daß die für die Torsionsschwingungen relevante Eigenfrequenz wesentlich geringer ist als die für die Biegeschwingungen relevante Eigenfrequenz und beeinflußt werden kann, ohne die Länge, die Masse und/ oder die Steifigkeit der Coriolis-Leitung zu beeinflussen, nämlich über den Pendelarm, d. h. über die Masse des Pendelarms und über den Abstand zwischen der Längsachse der Coriolis-Leitung und dem Angriffspunkt des Schwingungserzeugers am Pendelarm. Im übrigen offenbart die deutsche Offenlegungsschrift 41 24 296 Ausgestaltungen und Weiterbildungen des zuletzt beschriebenen Massendurchflußmeßgerätes.

Im übrigen gilt für die aus den vorveröffentlichten Druckschriften bekannten, nach dem Coriolis-Prinzip arbeitenden Massendurchflußmeßgeräte mit mindestens einer zumindest im wesentlichen geraden Coriolis-Leitung, daß die Coriolis-Schwingungen eine relativ geringe Amplitude haben und folglich der gewinnbare Meßwert nur sehr niedrig ist. Das resultiert aus der relativ hohen Steifigkeit der geraden Coriolis-Leitung, und zwar sowohl im Anregungsmode als auch im Coriolismode.

Bei allen in Rede stehenden, nach dem Coriolis-Prinzip arbeitenden Massendurchflußmeßgeräten mit mindestens einer zumindest im wesentlichen geraden Coriolis-Leitung können im übrigen Probleme daraus resultieren, daß ungewollte, also störende Schwingungen mit Frequenzen auftreten, die relativ nahe den Frequenzen der gewollten Schwingungen liegen, also der Schwingungen im Anregungsmode und im Coriolismode.

Bei einem in der US - C - 4,730,501 offenbarten Massendurchflußmeßgerät mit zwei zumindest abschnittsweise parallel laufenden geraden Coriolis-Leitungen ist es bekannt, die Versteifungsfeder im Zentrum der Coriolis-Leitungen derart anzubringen, daß das eine Ende der Versteifungsfeder mit der ersten Coriolis-Leitung und daß zweite Ende der Versteifungsfeder mit der zweiten Coriolis-Leitung verbunden ist. Eine derartige Anordnung einer Versteifungsfeder zwischen zwei schwingungsfähigen Systemen, nämlich den Coriolis-Leitungen, führt neben einer Erhöhung der Steifigkeit der Coriolis-Leitungen zu einer Kopplung der Coriolis-Leitungen. Über diese Kopplung können Energien aus dem einen schwingungsfähigen System auf das andere schwingungsfähige System, also von einer Coriolis-Leitung zur nächsten Coriolis-Leitung, übertragen werden.

Aus der EP - A - 0 361 388 ist weiter ein Massendurchflußmeßgerät mit einer gekrümmten Coriolis-Leitung bekannt, bei dem zwischen dem Zentrum der Coriolis-Leitung und einem zum Gehäuse zu rechnenden Sockel eine Strebe oder Führung mit Federeigenschaften angeordnet ist. Diese der Führung der Coriolis-Leitung dienende Strebe beeinflußt auch die Steifigkeit der Coriolis-Leitung.

Da gerade Coriolis-Leitungen konstruktionsbedingt bereits eine sehr hohe Eigensteifigkeit aufweisen, muß die Steifigkeit der Coriolis-Leitungen in einem erheblichen Umfang durch die Versteifungsfeder beeinflußt werden, um eine Annäherung der Eigenfrequenzen der Anregungsschwingung und der Coriolis-Schwingung zu gewährleisten.

Aus der WO - A - 87/06691 ist weiter ein Massendurchflußmeßgerät bekannt, bei welchem eine in einem antisymmetrischen Anregungsmode betriebene gerade Coriolis-Leitung in ihrem Zentrum mit einer Versteifungsfeder beaufschlagt ist. Eine solche Beaufschlagung einer in einem antisymmetrischen Anregungsmode betriebenen geraden Coriolis-Leitung in ihrem Zentrum führt primär nicht zu einer Erhöhung der Steifigkeit der Coriolis-Leitung für den Anregungsmode sondern für den Coriolismode. Dieser Stand der Technik offenbart hinsichtlich der konkreten Ausgestaltung der Versteifungsfeder eine Schraubenfeder oder ganz allgemein eine Blattfeder.

Ausgehend von dem geschilderten Stand der Technik liegt der Erfindung nunmehr die Aufgabe zugrunde, ein Massendurchflußmeßgerät der in Rede stehenden Art hinsichtlich des erreichbaren Meßergebnisses zu verbessern und insbesondere derart auszugestalten und weiterzubilden, daß die Versteifungsfeder hinsichtlich ihrer Eigenschaften wesentlich verbessert ist.

Das erfindungsgemäße Massendurchflußmeßgerät, bei dem die zuvor hergeleitete und dargelegte Aufgabe gelöst ist, ist nun dadurch gekennzeichnet, daß die Versteifungsfeder als Blattfeder ausgeführt ist, daß die Versteifungsfeder in einer zur Coriolis-Leitung senkrechten Ebene etwa V-förmig oder U-förmig, mit einem Steg und zwei Schenkeln ausgeführt ist, daß die Versteifungsfeder an den dem Steg abgewandten Enden der Schenkel mindestens jeweils einen - vorzugsweise nach außen gerichteten - Befestigungflansch aufweist und daß die Versteifungsfeder mit ihrem Steg an der Coriolis-Leitung und mit ihren Befestigungsflanschen am Gehäuse bzw. am Kompensationszylinder befestigt ist.

Erfindungsgemäß ist durch die beschriebene Versteifungsfeder gewährleistet, daß die Coriolis-Leitung für den Anregungsmode ohne die Kopplung von zwei schwingungsfähigen Systemen in einem zur Steigerung der Meßgenauigkeit ausreichende Grad erhöht ist.

Im einzelnen gibt es nun verschiedene Möglichkeiten, das erfindungsgemäße Massendurchflußmeßgerät auszugestalten und weiterzubilden. Dazu wird verwiesen auf ein Ausführungsbeispiel, das in Verbindung mit einer Zeichnung erläutert wird. In der Zeichnung zeigen
- Fig. 1: stark schematisch, einen Schnitt durch einen Teil einer bevorzugten Ausführungsform eines erfindungsgemäßen Massendurchflußmeßgeräts,
- Fig. 2: einen Schnitt durch den Gegenstand nach Fig. 1 längs der Linie II - II und
- Fig. 3: perspektivisch und in gegenüber den Fig. 1 und 2 vergrößerter Darstellung, die zu dem Massendurchflußmeßgerät nach den Fig. 1 und 2 gehörende Versteifungsfeder.

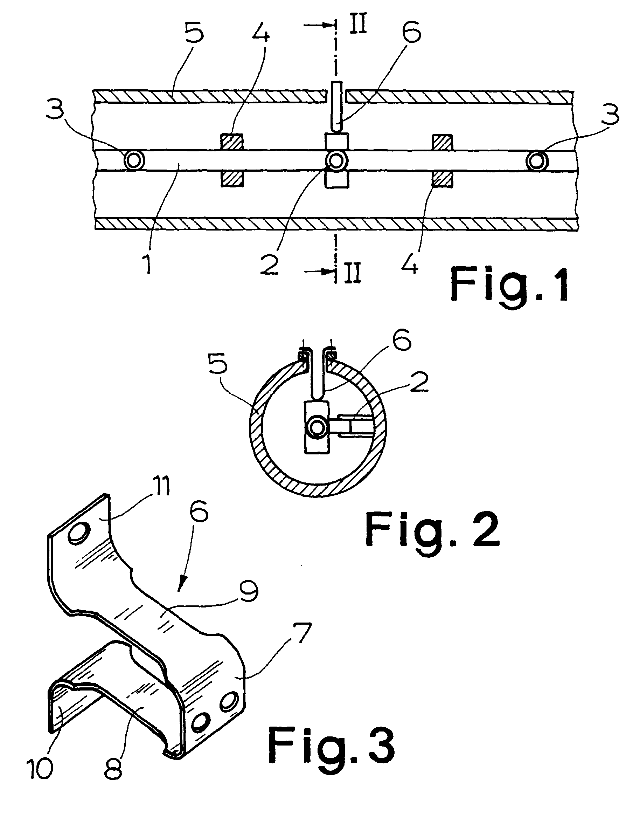

Bei dem erfindungsgemäßen Massendurchflußmeßgerät für strömende Medien handelt es sich um ein solches, das nach dem Coriolis-Prinzip arbeitet. Folglich gehören zu dem erfindungsgemäßen Massendurchflußmeßgerät eine das strömende Medium führende gerade Coriolis-Leitung 1, ein auf die Coriolis-Leitung 1 einwirkender Schwingungserzeuger 2 und zwei Coriolis-Kräfte und/oder auf Coriolis-Kräften beruhende Coriolis-Schwingungen erfassende Meßwertaufnehmer 3. Im übrigen zeigt die Fig. 1, daß die Coriolis-Leitung 1 noch mit Massekörpern 4 versehen ist, durch deren Masse und Anordnung die Eigenfrequenz der Coriolis-Leitung 1 - in bestimmten Grenzen - beeinflußt werden kann.

In den Fig. 1 und 2 ist dargestellt, daß die Coriolis-Leitung 1 innerhalb eines Kompensationszylinders 5 angeordnet ist. Weitere Einzelheiten in bezug auf die Bedeutung des Kompensationszylinders 5 und in bezug auf zu dem Massendurchflußmeßgerät noch gehörende Bauteile - Verbindungsringe, Aufnahmezylinder, Anschlußflansche, Anschluß-Leitungen, Verstärkungszylinder - können den Figuren nicht entnommen werden. Insoweit wird auf die Offenlegungsschrift 41 24 295 verwiesen.

Wie die Fig. 1 und 2 zeigen, ist die Coriolis-Leitung 1 mit einer, ihre Steifigkeit für den Anregungsmode erhöhenden Versteifungsfeder 6 beaufschlagt; die Versteifungsfeder 6 greift im Zentrum der Coriolis-Leitung 1 an. Diese Anbringung führt also zu einer Erhöhung der Steifigkeit der Coriolis-Leitung 1 für den Anregungsmode, ohne daß die Steifigkeit der Coriolis-Leitung 1 für den Coriolismode dadurch beeinflußt wird. Durch diese Maßnahme kann nun sichergestellt werden, daß sich die Frequenz der Schwingungen der Coriolis-Leitung 1 im Anregungsmode hinreichend stark von der Frequenz ungewollter, also störender Schwingungen abhebt, der Einfluß solcher störenden Schwingungen also weitgehend unterdrückt wird.

Die Versteifungsfeder 6 kann unterschiedlich ausgeführt sein. Im dargestellten Ausführungsbeispiel ist die Versteifungsfeder 6 erfindungsgemäß, wie insbesondere Fig. 3 zeigt, als Blattfeder ausgeführt, und zwar U-förmig mit einem Steg 7 und zwei Schenkeln 8, 9, wobei an dem, dem Steg 7 abgewandten Enden der Schenkel 8, 9 jeweils ein - nach außen gerichteter Befestigungsflansch 10, 11 vorgesehen ist.

Wie bereits weiter oben ausgeführt, handelt es sich bei dem dargestellten Ausführungsbeispiel eines erfindungsgemäßen Massendurchflußmeßgerätes um ein solches, bei dem die Coriolis-Leitung 1 innerhalb eines Kompensationszylinders 5 vorgesehen ist. Dabei ist dann die Versteifungsfeder 6 zwischen der Coriolis-Leitung 1 und dem Kompensationszylinder 5 vorgesehen. Erfindungsgemäß ist die Versteifungsfeder 6 mit ihrem Steg 7 an der Coriolis-Leitung 1 und mit ihren Befestigungsflanschen 10, 11 am Kompensationszylinder 5 befestigt.

## Patentansprüche

1. Massendurchflußmeßgerät für strömende Medien, das nach dem Coriolis-Prinzip arbeitet, mit mindestens einer das strömende Medium führenden, zumindest im wesentlichen geraden Coriolis-Leitung (1), mit mindestens einem auf die Coriolis-Leitung (1) einwirkenden Schwingungserzeuger (2), mit mindestens einem Coriolis-Kräfte und/oder auf Coriolis-Kräften beruhende Coriolis-Schwingungen erfassenden Meßwertaufnehmer (3), mit einem die Coriolis-Leitung (1) umschließenden Gehäuse oder Kompensationszylinder (5) und mit einer die Steifigkeit der Coriolis-Leitung (1) für den Anregungsmode erhöhenden, die Coriolis-Leitung (1) in ihrem Zentrum beaufschlagenden Versteifungsfeder (6), dadurch gekennzeichnet, daß die Versteifungsfeder (6) als Blattfeder ausgeführt ist, daß die Versteifungsfeder (6) in einer zur Coriolis-Leitung senkrechten Ebene etwa V-förmig oder U-förmig, mit einem Steg (7) und zwei Schenkeln (8, 9) ausgeführt ist, daß die Versteifungsfeder (6) an den dem Steg (7) abgewandten Enden der Schenkel (8, 9) mindestens jeweils einen - vorzugsweise nach außen gerichteten - Befestigungsflansch (10, 11) aufweist und daß die Versteifungsfeder (6) mit ihrem Steg (7) an der Coriolis-Leitung (1) und mit ihren Befestigungsflanschen (10, 11) am Gehäuse bzw. am Kompensationszylinder (5) befestigt ist.

## Claims

1. A mass flow measuring device for flowing media which operates according to the Coriolis principle, having at least one Coriolis line (1) which conveys the flowing medium and which is at least substantially straight, having at least one vibration generator (2) which acts on the Coriolis line (1), having at least one measuring sensor (3) which records Coriolis forces and/or Coriolis vibrations based on Coriolis forces, having a housing or compensating cylinder (5) which surrounds the Coriolis line (1), and having a stiffening spring (6) which increases the stiffness of the Coriolis line (1) for the excitation mode and which acts on the Coriolis line (1) in the centre thereof, characterised in that the stiffening spring (6) is constructed as a leaf spring, that the stiffening spring (6) is of approximately V-shaped or U-shaped construction, with a crosspiece (7) and two limbs (8, 9), in a plane perpendicular to the Coriolis line, that the stiffening spring (6) has at least one - preferably outwardly oriented - fixing flange (10, 11) at each of the ends of its limbs (8, 9) remote from the crosspiece (7), and that the stiffening spring (6) is fixed to the Coriolis line (1) by its crosspiece (7) and to the housing or compensating cylinder (5) by its fixing flanges (10, 11).

## Revendications

1. Appareil de mesure de débit massique pour milieux fluides, qui opère selon le principe de Coriolis, et comportant au moins un tube de Coriolis (1) au moins sensiblement droit acheminant le milieu fluide, au moins un générateur de vibrations (2) agissant sur le tube de Coriolis (1), au moins un capteur de mesure (3) captant les forces de Coriolis et/ou des vibrations de Coriolis basées sur les forces de Coriolis, un boîtier ou un cylindre de compensation (5) entourant le tube de Coriolis (1), et un ressort raidisseur (6) augmentant la rigidité du tube de Coriolis pour le mode d'excitation et frappé au centre du tube de Coriolis (1), caractérisé en ce que le ressort raidisseur (6) est disposé dans un plan perpendiculaire au tube de Coriolis (1) et se présente sous une forme approximativement en V ou en U avec une base (7) et deux branches (8, 9), en ce que le ressort raidisseur (6) présente, aux extrémités des branches (8, 9) opposées à la base (7), au moins respectivement une ailette de fixation (10, 11) - de préférence dirigée vers l'extérieur - et en ce que le ressort raidisseur (6) est fixé par sa base (7) au tube de Coriolis (1) et par ses ailettes de fixation (10, 11) sur le boîtier ou le cylindre de compensation (5).
